# EUROPÄISCHE PATENTSCHRIFT

(11) **EP 0 552 450 B1**
(45) Veröffentlichungstag und Bekanntmachung des Hinweises auf die Patenterteilung: **08.11.1995**
(21) Anmeldenummer: 92120776.7
(22) Anmeldetag: 05.12.1992
(51) Int. Cl.: C01G 5/00

(54) **Verfahren zur Herstellung von Silbernitratgranalien**
Process for the preparation of silver nitrate granules
Procédé de préparation de grenailles de nitrate d'argent

(30) Priorität: 22.01.1992 DE 4201589
(43) Veröffentlichungstag der Anmeldung: 28.07.1993
(73) Patentinhaber: Degussa Aktiengesellschaft, 60311 Frankfurt (DE)
(72) Erfinder: Hasenpusch, Wolfgang, Dr. Dipl.-Chem., W-6450 Hanau 9 (DE)

(56) Entgegenhaltungen:
- EP-A- 0 480 167
- US-A- 3 702 748

## Beschreibung

Die Erfindung betrifft ein Verfahren zur Herstellung von Granalien und anderen Formteilen aus Silbernitrat durch Abkühlenlassen entsprechender schmelzflüssiger Teilchen unter Lichtausschluß.

Silbernitrat ist das Ausgangsprodukt für viele anderen chemischen Silberverbindungen. In besonders hoher Reinheit findet es in der Fotoindustrie seinen Einsatz, wo große Mengen zur Herstellung von lichtempfindlichen Emulsionen verwendet werden. Aber auch die Galvanik benötigt große Mengen an Silbernitrat.

Bei der Handhabung von Silbernitrat in Form herkömmlicher Kristallisate macht sich besonders die gute Kompaktierfähigkeit sowie das belästigende Stauben negativ bemerkbar. Aufgrund des Kornspektrums ist der Kontakt zwischen den Silbernitratkristallen sehr groß, so daß besonders bei schweren Abpackungen und beim Übereinanderlagern von Kunststoffsäcken, die Silbernitrat enthalten, schwer handhabbare Kristallagglomerate entstehen. Diese Agglomerate erschweren das Umverpacken und das Dosieren des Silbernitrats.

Ebenso nachteilig sind die staubförmigen Feinanteile des Silbernitratpulvers, die zur gesundheitlichen Gefährdung der mit dem Silbernitrat umgehenden Menschen beitragen können, beispielsweise in Form von Verätzungen.

In der nicht vorveröffentlichten deutschen Patentanmeldung P 40 31 952.0 wird ein Verfahren zur Herstellung von staubfreien Silbernitratkügelchen einheitlicher Größe durch Verdüsen einer Silbernitratschmelze und Verfestigung der gebildeten Tropfen in einem Kühlmedium beschrieben. Hierzu benötigt man eine Silbernitratschmelze mit einer Reinheit von mehr als 99 % und einem pH-Wert zwischen 2 und 6, wobei das Verdüsen unter Lichtabschluß stattfinden muß.

Dieses Verfahren ist durch die Verwendung einer Verdüsungsapparatur sehr kostenaufwendig.

Es war daher Aufgabe der vorliegenden Erfindung, ein Verfahren zur Herstellung von Granalien und anderen Formteilen aus Silbernitrat durch Abkühlenlassen entsprechender schmelzflüssiger Teilchen unter Lichtausschluß zu entwickeln, das einfach durchführbar ist und Formteile liefert, die gut dosierbar sind und keine staubförmigen Feinanteile enthalten.

Diese Aufgabe wird erfindungsgemäß dadurch gelöst, daß die schmelzflüssigen Teilchen aus einer Silbernitratschmelze mit mehr als 99,9%iger Reinheit und einem Gehalt von 0,01 bis 1 % freier Salpetersäure bei Temperaturen oberhalb 210°C mechanisch erzeugt und auf ein gekühltes, bewegtes Stahlband gegeben werden.

Vorzugsweise beträgt die Reinheit der Silbernitratschmelze mehr als 99,99 %, wobei die freie Salpetersäure nicht als Verunreinigung gilt. Außerdem ist es vorteilhaft, die Schmelze nur auf Temperaturen zwischen 210 und 220°C zu erhitzen.

Das Erschmelzen und Granulieren erfolgt unter Ausschluß energiereicher Lichtstrahlung, wie es beim Arbeiten mit Silbersalzen üblich ist.

Zum Granulieren des geschmolzenen Silbernitrats werden Vorrichtungen verwendet, die aus einem Glas- oder Edelstahl-Schmelzbehälter die Schmelze auf ein gekühltes Band auftragen. Solche Vorrichtungen sind im Handel erhältlich. Es entstehen, je nach Auftragsvorrichtung Granalien, Bänder oder Stränge, die mit Schneideeinrichtungen in entsprechende Stücke geteilt werden können. Die schmelzflüssigen Granalien können, Je nach dem Lochdurchmesser beispielsweise perforierter ineinanderliegender Rohre, so genau dosiert werden, daß ihre Gewichte innerhalb geringer Toleranzen identisch sind. Dabei kann der Granaliendurchmesser von nur einem Millimeter bis zu zehn Millimeter betragen. Entsprechend variiert die Granalienform von der nahezu exakten Kugel bis zur flachen Pastille, deren Höhe etwa dem halben Durchmesser entspricht.

Die Schmelztemperatur des Silbernitrats von 210°C braucht nur knapp überschritten zu werden, da die beigesetzten Salpetersäuremengen die Schmelztemperatur um bis zu 2°C herabsetzen und das Granulieren im schmelzflüssigen Zustand noch bei Viskositäten bis zu 100 000 Centipoise möglich ist.

Die Granalien und Formstücke in Abmessungen unterhalb von 10 mm sind auch in Gebinden von 50 kg hinreichend stabil. Die Kontaktflächen gegenseitiger Partikelberührung sind so gering, daß auch in Gebinden und Behältnissen von einigen 100 kg kein Kompaktieren oder Selbstverkleben erfolgt. Granalien und Formteile bis zu 3 mm Länge bzw. Durchmesser sind völlig farblos. Größere Dimensionen erscheinen in einem leichten Graustich.

Folgendes Beispiel soll das erfindungsgemäße Verfahren näher erläutern:
10 kg Silbernitrat werden mit 10 ml konzentrierter Salpetersäure versetzt und auf knapp über 210°C erhitzt. Die Schmelze wird in eine beheizte Granuliervorrichtung überführt, die aus zwei beheizten, mit Löchern versehenen, ineinanderliegenden Rohren besteht. Die schmelzflüssigen Granalien fallen auf ein wassergekühltes, bewegtes Stahlband, wo sie erstarren. Entsprechend dem Lochdurchmesser erhält man Granalien von 3,2 mm Durchmesser mit einer Standardabweichung von 0,2 mm. Die Granalien besitzen eine völlig glatte, auf der Unterseite leicht abgeflachte Oberfläche und sind nahezu farblos. Sie eignen sich hervorragend für den Einsatz in der Fotoindustrie und in der Galvanotechnik.

## Patentansprüche

1. Verfahren zur Herstellung von Granalien und anderen Formteilen aus Silbernitrat durch Abkühlenlassen entsprechender schmelzflüssiger Teilchen unter Lichtausschluß,
**dadurch gekennzeichnet**,
daß die schmelzflüssigen Teilchen aus einer Silbernitratschmelze mit mehr als 99,9%iger Reinheit und einem Gehalt von 0,01 bis 1 % freier Salpetersäure bei Temperaturen oberhalb 210°C mechanisch erzeugt auf ein gekühltes, bewegtes Stahlband gegeben werden.

2. Verfahren nach Anspruch 1,
**dadurch gekennzeichnet**,
daß die Silbernitratschmelze eine Reinheit von 99,99 % aufweist.

3. Verfahren nach Anspruch 1 oder 2,
**dadurch gekennzeichnet**,
daß die Silbernitratschmelze auf Temperaturen zwischen 210 und 220°C erhitzt wird.

## Claims

1. Process for the production of granules and other moulded products of silver nitrate by allowing the corresponding molten particles to cool with the exclusion of light,
characterised in that
the molten particles are mechanically produced at temperatures of above 210°C from a silver nitrate melt having a purity of more than 99.9% and a content of from 0.01 to 1% of free nitric acid and are placed on a cooled moving steel belt.

2. Process according to claim 1,
characterised in that
the silver nitrate melt has a purity of 99.99%.

3. Process according to claim 1 or 2,
characterised in that
the silver nitrate melt is heated to temperatures of between 210 and 220°C.

## Revendications

1. Procédé de production de grenailles et autres pièces moulées en nitrate d'argent par abandon pour refroidissement des particules liquides de fusion correspondantes, à l'abri de la lumière, caractérisé en ce que les particules liquides de fusion en un produit de fusion de nitrate d'argent ayant une pureté supérieure à 99,9 % et une teneur en acide nitrique libre de 0,01 à 1 % sont obtenues, d'une manière mécanique, à des températures au-dessus de 210°C et sont versées sur un ruban d'acier refroidi, en mouvement.

2. Procédé selon la revendication 1, caractérisé en ce que le produit de fusion du nitrate d'argent possède une pureté de 99,99 %.

3. Procédé selon la revendication 1 ou 2, caractérisé en ce que le produit de fusion du nitrate d'argent est chauffé à des températures comprises entre 210 et 220°C.
